(19) Europäisches Patentamt
European Patent Office
Office européen des brevets

(11) **EP 2 047 098 B1**

(12) **EUROPÄISCHE PATENTSCHRIFT**

(45) Veröffentlichungstag und Bekanntmachung des Hinweises auf die Patenterteilung:
**15.05.2013 Patentblatt 2013/20**

(21) Anmeldenummer: **07786385.0**

(22) Anmeldetag: **27.07.2007**

(51) Int Cl.:
**F03D 7/02** *(2006.01)*   **F03D 7/04** *(2006.01)*

(86) Internationale Anmeldenummer:
**PCT/EP2007/006671**

(87) Internationale Veröffentlichungsnummer:
**WO 2008/014935 (07.02.2008 Gazette 2008/06)**

(54) **KALIBRIERVERFAHREN**

CALIBRATION METHOD

PROCÉDÉ DE CALIBRAGE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **01.08.2006 DE 102006036157**

(43) Veröffentlichungstag der Anmeldung:
**15.04.2009 Patentblatt 2009/16**

(73) Patentinhaber: **REpower Systems SE**
**22297 Hamburg (DE)**

(72) Erfinder: **BOLZ, Detlef**
**23627 Gross Grönau (DE)**

(74) Vertreter: **Seemann, Ralph**
**Patentanwälte Seemann & Partner**
**Ballindamm 3**
**20095 Hamburg (DE)**

(56) Entgegenhaltungen:
**EP-A- 0 995 904      EP-A- 1 359 321**
**WO-A-01/33075      WO-A-99/57435**
**WO-A-2005/111414    DE-A1- 10 219 664**

EP 2 047 098 B1

**Beschreibung**

Die Erfindung betrifft ein Verfahren zum Betreiben einer Windenergieanlage umfassend ein Kalibrierverfahren wenigstens eines Sensors einer Windenergieanlage und eine entsprechende Windenergieanlage.

Aufgrund von immer größer werdenden Rotoren von Windenergieanlagen gewinnen Regelstrategien zur Minimierung von Belastungen der Windenergieanlage, insbesondere eine Regelstrategie für einen Blattumlaufpitch, immer mehr an Bedeutung. Hierbei wird beispielsweise jedes Rotorblatt während des Umlaufs individuell in den Wind gedreht (gepitcht), so dass die mechanische Gesamtlast, die über die Rotorwelle und die Gondel in den Turm eingeleitet wird, minimiert werden kann. Als eine wesentliche Messgröße hierbei werden Blattbiegemomente für jedes Rotorblatt oder andere Biegemomente, beispielsweise an einer Generatorwelle oder der Rotornabe oder anderen sich drehenden Teilen, der Windenergieanlage benötigt. Außerdem werden entsprechende Belastungsmessungen durch entsprechende Sensoren für Lastmessungen der Windenergieanlage benötigt.

Sensoren können hierbei nicht hundertprozentig genau an dem Ort angebracht werden, an dem diese angebracht sein sollen bzw. Sensoren können im Verlauf der Zeit ihre Eigenschaften ändern, so dass eine Kalibrierung der Sensoren notwendig ist, die üblicherweise von Hand durchgeführt wird. Die Belastung der Rotorblattwurzel bei modernen Windenergieanlagen ist im Wesentlichen gekennzeichnet durch eine Überlagerung der Biegemomente aus der Aerodynamik (im Wesentlichen senkrecht zur Rotorebene, entsprechend dem Schlagmoment) sowie dem Biegemoment, das aus dem Eigengewicht der Rotorblätter, im Wesentlichen in der Rotorebene (Schwenkmoment) sowie Normalkräften resultierend aus dem Eigengewicht und der Zentrifugalkraft (abhängig von der Rotordrehzahl) sowie Kräften und Momenten aus der Dynamik der Rotoren, die insbesondere dann von Wichtigkeit sind, wenn es zu unerwünschten Schwingungen kommt (siehe DE 102 19 664 A1).

Um Belastungsmessungen durchzuführen, werden üblicherweise Dehnungsmessstreifen verwendet, die üblicherweise derart verschaltet werden, dass nur Biegedehnungen, nicht aber Normalkräfte aus Temperaturausdehnungen oder Fliehkräften, berücksichtigt werden. Die Kalibration der Blattwurzelbiegemomente erfolgt gegen das Schwerkraftbiegemoment aus der bekannten Masse und dem bekannten Schwerpunktsabstand des Blattes von der Messstelle bei waagerecht gestelltem Rotorblatt. Zur Bestimmung des Nullpunktes der Biegemomentemessungen wird das Rotorblatt vertikal gestellt oder alternativ horizontal, wobei bei der horizontalen Stellung zur Ermittlung des Nullpunktes das Rotorblatt um die Rotorblattlängsachse gedreht (gepitcht) wird. Das Schlag- bzw. Schwenkbiegemoment ist durch Drehen des Blattstellwinkels um 90° ansprechbar, was die gewählte Kalibriermethode einfach machen kann. Zum Auswählen und Kalibrieren muss demnach gem. dem Artikel "Messung von Lastkollektiven in einem Windpark" von H. Seifert und H. Söker in DEWI, 1994, Seite 399 bis 402, die Anlage kurzzeitig still gesetzt werden. Hierzu werden die Daten über ein Notebook ausgelesen und entsprechend ausgewertet, um eine Kalibrierung vorzunehmen.

Aus WO 2005/111414 A sind ein Verfahren zur Steuerung der Rotorblätter einer Windenergieanlage sowie eine Windenergieanlage mit einem Messsystem zur Durchführung des Verfahrens bekannt. Es wird ein Resonanz-, Eigenfrequenz-, Durchlauf- und/oder Reflektionssignalspektrum des Rotorblattes gemessen und mit einem entsprechenden Soll-Spektrum verglichen. Anschließend wird in Abhängigkeit von der Größe der Abweichungen des gemessenen Spektrums außerhalb eines Zulässigkeitsbereichs ein Störsignal gebildet und bei Auftreten des Störsignals die Stellung des Rotorblattes so beeinflusst, dass eine der Veränderung angepasste Dehnung in der Steuerung als Steuerungsgröße eingesetzt wird.

EP 1 359 321 A1 offenbart eine Windenergieanlage, bei der jedem Rotorblatt zwei Sensorelemente zugeordnet sind und mechanische Belastungen der Rotorblätter anhand der Sensorsignale bestimmt werden. Die aus den gemessenen Werten der Sensoren berechneten Belastungen werden abhängig von der Temperatur, der Zentrifugalkraft und der Gravitation aufgrund beispielsweise anderer Sensoren berechnet. Es wird ferner überwacht, ob ein Sensor fehlerhaft ist und in diesem Fall auf einen anderen Sensor geschaltet.

WO 99/57435 A offenbart eine Windenergieanlage, die einen Sensor auf einem Rotorblatt aufweist. Der Sensor dient dazu, die Belastungen des Rotorblatts zu messen. Es werden Vibrationen des Blattes gemessen.

WO 01/33075 A1 offenbart ein Verfahren und eine Windenergieanlage, bei dem bzw. bei der die mechanischen Belastungen der Blätter gemessen werden und in Abhängigkeit der Belastungen der Pitch-Winkel eingestellt wird.

EP 0 995 904 A2 offenbart eine Windkraftanlage mit einem Rotor und einem Aufnehmer, der eine Messgröße liefert, die ein Maß für die aktuelle Belastung eines Elements der Struktur der Anlage bildet, wobei der Anstellwinkel in Abhängigkeit von der Messgröße verändert wird. Die Messgröße stellt eine Beschleunigung oder Verformung des Bauelements dar. Hierbei werden die Messwerte mit einem Belastungsprofil verglichen, das in Abhängigkeit von dem Betriebszustand und/oder der Betriebsdauer der Windkraftanlage und der Anzahl und Größe an bis zum jeweiligen Betriebszeitpunkt aufgetretenen Lastwechseln verändert und angepasst wird.

Es ist Aufgabe der vorliegenden Erfindung, ein Verfahren zum Betreiben einer Windenergieanlage umfassend ein Kalibrierverfahren wenigstens eines Sensors einer Windenergieanlage und eine Windenergieanlage anzugeben, mittels derer es effizient möglich ist, verlässliche Daten von Belastungen an Bauteilen der Windenergieanlage zu erhalten.

Gelöst wird diese Aufgabe durch den Gegenstand der Ansprüche 1 und 9. Die Aufgabe wird auch durch ein Verfahren zum Betreiben einer Windenergieanlage umfassend ein Kalibrierverfahren wenigstens eines Sensors gelöst, wobei das Kalibrierverfahren automatisch ausgeführt wird. Ein automatisches Ausführen des Kalibrierverfahrens bedeutet im Rahmen der Erfindung, insbesondere dass dieses ohne Einwirkung einer Bedienperson durchgeführt bzw. vollzogen wird. Es wird insbesondere auf die nachstehende Definition eines automatischen Kalibrierverfahrens Bezug genommen. Vorzugsweise ist der wenigstens eine Sensor ein Belastungssensor.

Das erfindungsgemäße Verfahren zum Betreiben einer Windenergieanlage weist erfindungsgemäß ein Verfahren zum Kalibrieren wenigstens eines Sensors einer Windenergieanlage, wobei die Windenergieanlage wenigstens ein bewegbares Bauteil aufweist, wobei das Bauteil um eine vorbestimmbare Achse geschwenkt oder gedreht wird und wobei ein von dem wenigstens einen Sensor erfasster Messwert, der ein Maß für die Belastung des Bauteils ist, ausgewertet wird. Hierbei umfasst das Auswerten insbesondere einen Vergleich des durch eine Kalibrierfunktion angepassten Messwertes mit einem vorgebbaren und/oder gespeicherten Sollwert bzw. einer Referenz, die eine Funktion, ein Wert oder eine Matrix sein kann. Die Kalibrierfunktion kann ein Faktor sein oder eine Matrix oder eine Funktion, die abhängig von einem oder mehreren Betriebsparametern der Windenergieanlage ist.

Zudem umfasst das erfindungsgemäße Verfahren zum Betreiben einer Windenergieanlage das Merkmal auf, dass das Kalibrierverfahren durch ein Kalibriersignal initiiert wird, wobei nach dem Initiieren des Kalibrierverfahrens durch das Kalibriersignal die Windenergieanlage angehalten wird oder das Kalibrierverfahren beim Trudeln der Rotorblätter erfolgt, wobei das Auswerten es umfasst, dass bei einer Abweichung des durch eine Kalibrierfunktion angepassten Messwertes von einer vorgebbaren und/oder gespeicherten und/oder ermittelten Referenz, die größer ist als ein vorgebbarer Abweichungsgrenzwert, der durch die Kalibrierfunktion angepasste Messwert Basis für das Erstellen und Speichern einer angepassten Kalibrierfunktion ist, oder wobei das Auswerten es umfasst, dass bei einer Abweichung des erfassten Messwertes von einer vorgebbaren und/oder gespeicherten und/oder ermittelten Referenz, die größer ist als ein vorgebbarer Abweichungsgrenzwert, der erfasste Messwert Basis für das Erstellen und Speichern einer angepassten Kalibrierfunktion ist. In der ersten Variante ist es möglich bei sich verändernden Rahmenbedingungen, beispielsweise bei einer sich erhöhenden Temperatur und/oder einem Temperaturdrift des entsprechenden Sensors oder bei einem Alterungseffekt des Sensors oder sonstigen Effekten, die zu an sich unerwünschten Messeffekten und falsche Momente hervorrufende Messeffekten führen, diese entsprechend anzupassen. Hierbei wird die Kalibrierfunktion insbesondere aktualisiert, wobei von der vorherigen gespeicherten Kalibrierfunktion ausgegangen wird und ausgehend von dieser eine neue Kalibrierfunktion ermittelt wird und gegebenenfalls entsprechend abgespeichert wird. Im Rahmen der Erfindung wird unter Abweichungsgrenzwert insbesondere auch der Begriff Abweichungssollwert verstanden. Wenn im Folgenden von Abweichungssollwert die Rede ist, ist auch ein Abweichungsgrenzwert gemeint.

Alternativ sieht es eine andere Variante vor, die Referenz derart zu gestalten, dass sie direkt mit den Sensor-Messdaten verglichen werden kann. Der Vorteil dieses Verfahrens liegt darin, dass nicht auf eine vorhandene, gespeicherte Kalibrierfunktion zur Bestimmung der neuen, angepassten Kalibrierfunktion zurückgegriffen werden muss. Die Errechnung der Kalibrierfunktion kann dann komplexer sein. Die Sensor-Rohdaten können gegebenenfalls nur einer Mittelung (z. B. zeitliche Mittelung von mit hoher Abtastrate erfassten Messwerten) unterzogen werden, um mit der Referenz vergleichbare Sensor-Messdaten zu erhalten.

Besonders effizient ist das Kalibrierverfahren, wenn eine Mehrzahl von Messwerten des wenigstens einen Sensors beim Schwenken oder Drehen des Bauteils aufgenommen oder ausgewertet wird. Hierdurch ist eine sehr genaue Anpassung der Kalibrierfunktion möglich.

Vorzugsweise umfasst die Referenz eine Mehrzahl oder eine Funktion von Sollwerten, die vorgebbar und/oder gespeichert und/oder ermittelt sind. Wenn das Erstellen und das Speichern einer angepassten Kalibrierfunktion wiederholt werden, und zwar insbesondere vorzugsweise mehrfach, ist ein gesichertes Messergebnis gegeben.

Erfindungsgemäß sieht das Verfahren vor, dass die Auswertung und/oder das Kalibrierverfahren automatisch erfolgt bzw. ausgeführt wird. Unter einem automatischen Geschehen, wird im Rahmen der Erfindung insbesondere verstanden, dass dieses ohne Einwirkung einer Bedienperson durchgeführt werden kann, d. h. dass die Auswertung und/oder das Kalibrierverfahren nach einem Initiierungssignal, das unter Umständen auch von einer Bedienperson gegeben werden kann, automatisch durchgeführt wird, d. h. ohne weiteren Eingriff der Bedienperson, wobei das Ergebnis dann eine neue Kalibrierfunktion sein kann oder aber lediglich das Vorhandensein von entsprechenden Belastungsmesswerten, die zur Steuerung und/oder Regelung der Windenergieanlage Verwendung finden. Das Initiierungssignal der Auswertung und/oder des Kalibrierverfahrens kann auch ohne Zuhilfenahme einer Bedienperson erzeugt werden, beispielsweise wenn ein vorbestimmbares Zeitintervall und/oder vorteilhafte Umgebungsbedingungen, beispielsweise eine Windgeschwindigkeit, die unterhalb einer vorgebbaren Grenzgeschwindigkeit wie beispielsweise 7 m/s vorliegt und/oder ein Einzelereignis, z. B. eine ungewöhnliche Signalabweichung, wie ein Driften eines Sensorsignals nach einem Plausibilitätscheck, entsprechend vorgebbare Temperaturschwankung, ein Notstopp oder eine manuelle Anforderung, vorliegt.

Vorzugsweise werden die Messwerte mit einer Frequenz von 0,01 bis 1000 Hz, insbesondere 10-500 Hz, aufgenommen.

Ferner vorzugsweise werden die Messwerte über den vollen Bereich des Schwenkens oder Drehens aufgenommen, wodurch sich ein sehr genaues Kalibrierverfahren ergibt.

Das Bauteil ist vorzugsweise ein Rotorblatt und/oder eine Nabe und/oder eine Welle einer Windenergieanlage. Die Achse ist vorzugsweise eine Rotorwellenachse oder eine Rotorblattlängsachse. Besonders effizient ist das Verfahren, wenn das Bauteil ein Rotorblatt ist und das Schwenken oder Drehen über mehr als 90°, insbesondere mehr als 100°, insbesondere mehr als 120°, insbesondere mehr als 180°, insbesondere mehr als 270°, insbesondere mehr als 360°, geschieht. Wenn das Bauteil eine Nabe und/oder eine Welle ist, wobei das Schwenken oder Drehen über mehrere Umläufe geschieht, ist ein sehr genaues Kalibrierverfahren möglich.

Wenn ein Fehlersignal erzeugt wird, sofern ein vorstehendes Kalibrierverfahren in einer vorgebbaren Zahl von Iterationen wiederholt dazu führt, dass die Abweichung des mit der Kalibrierfunktion angepassten Messwertes von der Referenz größer ist als ein vorgebbarer Abweichungssollwert, ist es auf einfache Weise möglich, defekte Sensoren festzustellen. Hierbei können auch eine Mehrzahl oder eine Funktion bzw. eine Interpolation der Messwerte vorgesehen sein.

Das Kalibrierverfahren kann bei einer stillstehenden Windenergieanlage durchgeführt werden, wenn das Kalibrieren von Sensoren am Rotorblatt oder an der Rotorblattwurzel bzw. am Rotorblattflansch durchgeführt werden soll.

Für die Kalibrierung dieser Sensoren kann allerdings auch eine trudelnde Windenergieanlage vorgesehen sein, also eine Windenergieanlage, deren Rotorblätter sich um die Rotorachse langsam drehen. Die einzelnen Messwerte können dann mit der Referenz verglichen werden, und zwar nach Anwendung der Kalibrierfunktion auf die Messwerte, beispielsweise Multiplikation der Kalibrierfunktion mit den Messwerten oder eine andere Operation, die entsprechend vorgesehen sein kann. Die Referenz kann insbesondere eine Funktion sein, aber auch ein einzelner Wert. Das Kalibrierverfahren kann somit auch bei einer trudelnden, d. h. sich langsam bewegenden, Windenergieanlage durchgeführt werden, wobei hierbei die Kalibrierfunktion durch eine Statistik, insbesondere ein mehrfaches Durchführen der Kalibrierung, ermittelt werden kann, um beispielsweise ungleichmäßige Windstärken und ungleichmäßige Drehzahlen beispielsweise zu kompensieren. Hierbei wird insbesondere eine Bewertung mit einem Mittelwert und einer Standardabweichung vorzusehen sein. Es ist vorzugsweise eine entsprechende Wiederholung der Kalibrierung durchzuführen, die so lange durchzuführen ist, bis eine vorgegebene Genauigkeit erreicht ist.

Es kann auch vorgesehen sein, den Rotor bei wenig Wind durch zwei Rotorblätter auf geringer und konstanter Drehzahl zu halten, während das dritte Rotorblatt um die Pitchachse rotierend kalibriert wird, wobei naturgemäß entsprechend schnelle Regelalgorithmen notwendig sind, um tatsächlich eine konstante Drehzahl einzuhalten und um so die Kalibrierung entsprechend genau durchführen zu können. Hierzu empfiehlt sich auch das Durchführen mehrerer abgeschlossener Kalibrierverfahren, um eine ausreichend gute Statistik zu erhalten. Unter einem abgeschlossenem Kalibrierverfahren wird ein vollständiger Durchlauf des Kalibrierverfahrens verstanden, bei dem beispielsweise die durch die Sensoren ermittelten Messwerte in Belastungen des Bauteils umgerechnet werden, also auf die Kalibrierfunktion angewendet werden bzw. die Kalibrierfunktion auf die Messwerte angewendet wird. Hierbei kann beispielsweise ein Verschwenken eines Rotorblattes von -190° bis +190° vorgesehen sein oder von 0° bis +92°. Die dabei ermittelten Messwerte werden dann entsprechend weiterverarbeitet, wobei bei +190° bzw. bei 92°, um bei den Beispielen zu bleiben, das Kalibrierverfahren vollständig ist. Es können dann für eine bessere Statistik wiederholte Durchläufe des Kalibrierverfahrens vorgesehen sein.

Dieser Vorgang wird vorzugsweise nacheinander für alle Blätter durchgeführt und vorzugsweise insbesondere mehrfach, bis eine ausreichende Kalibriergenauigkeit erreicht ist. Vorzugsweise wird das Kalibrierverfahren bei wenig Wind durchgeführt, um keinen oder wenig Ertragsausfall und eine erhöhte Genauigkeit zu gewährleisten. Bei Windstille ist es bevorzugt, dass der Rotor über motorische Antriebe entsprechend positioniert wird, so dass beispielsweise die Sensoren eines Rotorblattes kalibriert werden können, wobei dann die Rotorblattlängsachse im Wesentlichen waagerecht gestellt wird.

Bei den üblicherweise verwendeten oder verwendbaren Sensoren werden beispielsweise ein Offset, eine Steigung und ggf. eine Nichtlinearität sowie eine Fehlpositionierung der Sensoren zu kalibrieren sein. Bei einer Fehlpositionierung der Sensoren kann eine Koordinatentransformation stattfinden.

Es ist ferner vorzugsweise eine Steuer- und/oder Regelvorrichtung und außerdem ein Kalibriermodul vorgesehen, wobei das Kalibriermodul das Kalibrieren der Messwerte durchführt und die kalibrierten Werte der Steuer- und/oder Regelvorrichtung als Eingangsgrößen übermittelt. Mittels der Steuer- und/oder Regelvorrichtung wird der Betrieb der Windenergieanlage gesteuert und/oder geregelt. Die Steuer- und/oder Regelvorrichtung kann die Betriebsführung sein bzw. umfassen.

Erfindungsgemäß wird das Kalibrierverfahren durch ein Kalibriersignal initiiert. Vorzugsweise ist das Kalibriermodul in der Steuer - und/oder Regelvorrichtung integriert, wodurch eine schnelle Verfahrensführung möglich ist.

Erfindungsgemäß wird nach dem Initiieren des Kalibrierverfahrens durch das Kalibriersignal die Windenergieanlage angehalten. Hierdurch kann das vorstehend beschriebene Kalibrierverfahren durchgeführt werden. Die Windenergieanlage kann nach dem Initiieren des Kalibrierverfahrens auch trudelnd weiterbetrieben werden, wobei dann bevorzugt mehrere Messreihen durchgeführt werden, um eine Statistik zu erhalten, die aussagekräftig und ausreichend genau ist. Vorzugsweise wird nach dem Initiieren des Kalibrierverfahrens durch das Kalibriersignal ein Rotorblatt einer Windenergieanlage in eine vorgebbare Lage verbracht. Vorzugsweise geschieht das Verbringen in eine vorgebbare Lage durch Bewegung um zwei Bewegungsachsen: einerseits durch Drehung um die Turmhochachse durch das Windnachführsystem, wodurch die Rotorebene in einen vorbestimmten Winkel zur Windrichtung, bevorzugt senkrecht zur Windrichtung (ca. 90°) oder senkrecht (ca. 90°) zur Normalen der Rotorebene verbracht wird. Weiterhin durch Drehung um die Rotorachse, wobei das zu kalibrierende Rotorblatt in einem vorgebbaren Winkel zur Horizontalen, insbesondere in eine horizontale Position, verbracht wird.

Die Aufgabe wird ferner durch eine Windenergieanlage mit einem Kalibriermodul zum automatischen Kalibrieren wenigstens eines Sensors, der die Belastung eines bewegbaren Bauteils der Windenergieanlage misst, gelöst, wobei das Kalibriermodul zur Ausführung eines erfindungsgemäßen Verfahrens, wie vorstehend beschrieben, ausgebildet ist. Vorzugsweise ist außerdem eine Steuer - und/oder Regelvorrichtung vorgesehen, die mit dem Kalibriermodul verbunden ist oder in die das Kalibriermodul integriert ist, so dass die Windenergieanlage durch die Steuer- und/oder Regelvorrichtung gesteuert oder geregelt werden kann, und zwar in Abhängigkeit der durch das Kalibriermodul kalibrierten Messsignale entsprechender Belastungssensoren.

Die Erfindung wird nachstehend ohne Beschränkung des allgemeinen Erfindungsgedankens anhand von Ausführungsbeispielen unter Bezugnahme auf die Zeichnungen beschrieben. Bezüglich aller im Text nicht näher erläuterten erfindungsgemäßen Einzelheiten wird ausdrücklich auf die Zeichnungen verwiesen. Es zeigen:

Fig. 1    eine schematische Darstellung einer Windenergieanlage,

Fig. 2    eine schematische Darstellung eines Teils einer Windenergieanlage,

Fig. 3    eine schematische Ansicht eines Rotorblattes vom Blattflansch in ein horizontal gestelltes Rotorblatt,

Fig. 4    eine entsprechende Darstellung wie in Fig. 3 nur in einer anderen Ausrichtung bzw. einem anderen Pitchwinkel des Rotorblattes,

Fig. 5    eine schematische Ansicht einer Windenergieanlage,

Fig. 6    ein Messsignaldiagramm, und

Fig. 7    eine Darstellung eines Diagramms kalibrierter Messsignale sowie theoretischer Werte.

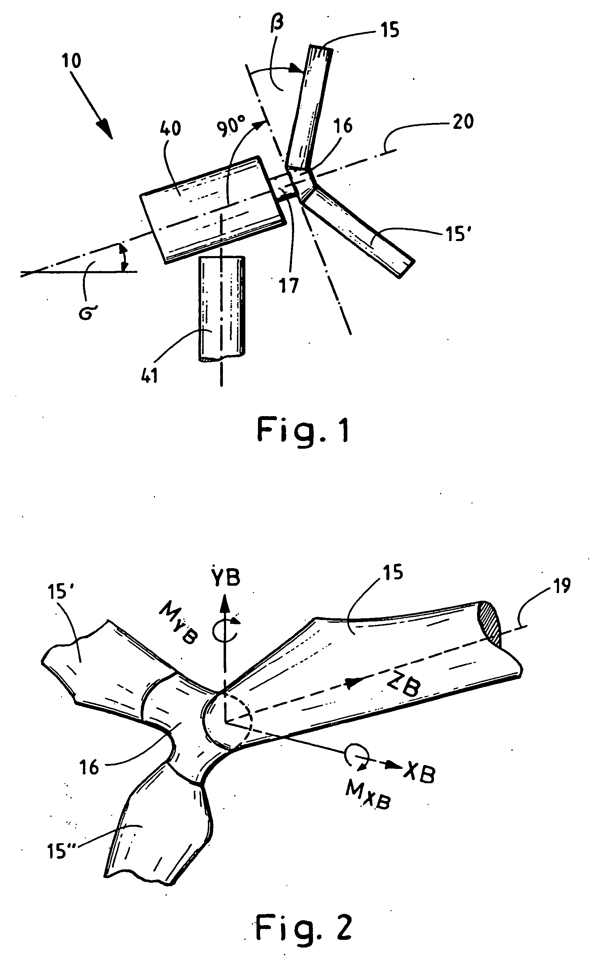

Das Kalibrieren eines Systems ist die Ermittlung und Festlegung eines funktionalen Zusammenhangs zwischen einer Zähl- bzw. messbaren Größe und einer zu bestimmenden Objekteigenschaft. In den Ausführungsbeispielen gem. den Fig. 1 bis 7 wird eine sich mit dem Blattbiegemoment monoton ändernde Messgröße, z. B. eine Brückenspannung einer Dehnmessstreifen-Messbrücke in Relation zu einem bekannten statischen Blattbiegemoment gesetzt. Nach Ausliefern eines Rotorblattes liegt in der Regel für jedes Rotorblatt individuell ein Wiegeprotokoll des Herstellers vor. Aus diesem kann der Schwerpunktsabstand zum Blattflansch sowie das Blattgesamtgewicht abgelesen werden.

Die Kalibrierung der Messgröße ist notwendig, weil sich bei den bisher realisierten Messverfahren keine feste Übertragungsfunktion der durch die Messsignale von Sensoren ergebenden Werte zu entsprechenden Momenten definieren lässt. Wenn beispielsweise die Blattdehnung im zylindrischen Teil der Blattwurzel gemessen wird, so kann aufgrund der Inhomogenität des Faserverbundmaterials mit dem Dehnungswert bisher nicht genau genug auf das reale Biegemoment zurückgerechnet werden. Hinzu kommt, dass Wheatstone'sche Messbrücken leicht verstimmen, so dass jedes Justieren der Messstelle eine Nachkalibrierung erforderlich macht.

Zur Definition von Begriffen ist Fig. 1 vorgesehen, die eine schematische Darstellung eines Teils einer Windenergieanlage 10 darstellt. Es ist eine Gondel 40 auf einem Turm 41 aufgebracht, was schematisch dargestellt ist. In der Gondel 40 ist eine Wellenachse 20 vorgesehen, die mit einem Winkel $\sigma$, der eine Achsneigung definiert, zur Horizontalen ausgerichtet ist. Eine Welle 17 ist mit Rotorblättern 15, 15' über eine Nabe 16 verbunden. Die Rotorblätter 15, 15' stehen mit einem Konuswinkel $\beta$ von der Normalen der Wellenachse 20 ab.

In Fig. 2 ist schematisch ein Teil von Rotorblättern 15 bis 15'' und eine Nabe 16 dargestellt, mit der das Koordinatensystem des Blattflansches gezeigt werden soll. Die Drehachse des Rotorblattes ist mit ZB angegeben. Die hierauf orthogonalen Achsen sind XB und YB. Eine Drehung um die Achse YB ergibt ein Schlagmoment, das mit $M_{YB}$ angegeben ist und eine das Moment um die Achse YB darstellt. YB liegt in der Ebene, die durch die Rotorblattlängsachsen aufgespannt wird. $M_{YB}$ wird im Rahmen der Erfindung auch $M_F$ genannt. Die Angriffsrichtung der Kraft, die zu diesem Moment gehört, ist in Richtung XB. Entsprechend definiert das Moment um die Achse XB das Schwenkmoment, das mit $M_{XB}$ angegeben ist und im Rahmen der Erfindung auch als $M_S$ bezeichnet wird. Die Angriffsrichtung der Kraft dieses Momentes ist in Richtung der Achse YB. Im Betrieb wirkt auf jedes Rotorblatt 15 bis 15'' bezogen auf das Blattflanschkoordinatensystem gem. Fig. 2 ein Schlag- und Schwenkmoment. Das Schwenkmoment resultiert im Wesentlichen aus der Gewichtslast des Rotorblattes, hinzu kommt ein Anteil aus dem den Rotor antreibenden Drehmoment. Das Schlagmoment entsteht durch die Windlast auf den Rotor. Wird das Rotorblatt 15, 15' bzw. 15" beim Abregeln aerodynamisch aus dem Wind gedreht (gepitcht), so kann dieses Moment in Schlagrichtung verringert werden. Ein Rotorblatt hat ein Eigengewichtsmoment MBL, das sich aus einer Multiplikation des Schwerpunktabstands von der Rotornabe zum Schwerpunkt des Rotorblattes mit der Gesamtblattmasse und der Gravitationsbeschleunigung (beispielsweise 9,81 m/s$^2$) ergibt.

Zur Referenzierung der Sensorsignale ist vorzugsweise der Schwerpunktabstand zur Sensorposition zu berücksichtigen. Generell sollten für die Referenz sowohl Geometriedaten (Achsneigung, Sensorposition und Orientierung, Blatt- und/oder Rotorposition) als auch Bauteilparameter (Masse, Schwerpunktskoordinaten, evtl. Strukturdaten, falls von der vereinfachten Annahme der gleichmäßigen Lastverteilung in der zylindrischen Blattwurzel abgewichen werden soll) berücksichtigt werden.

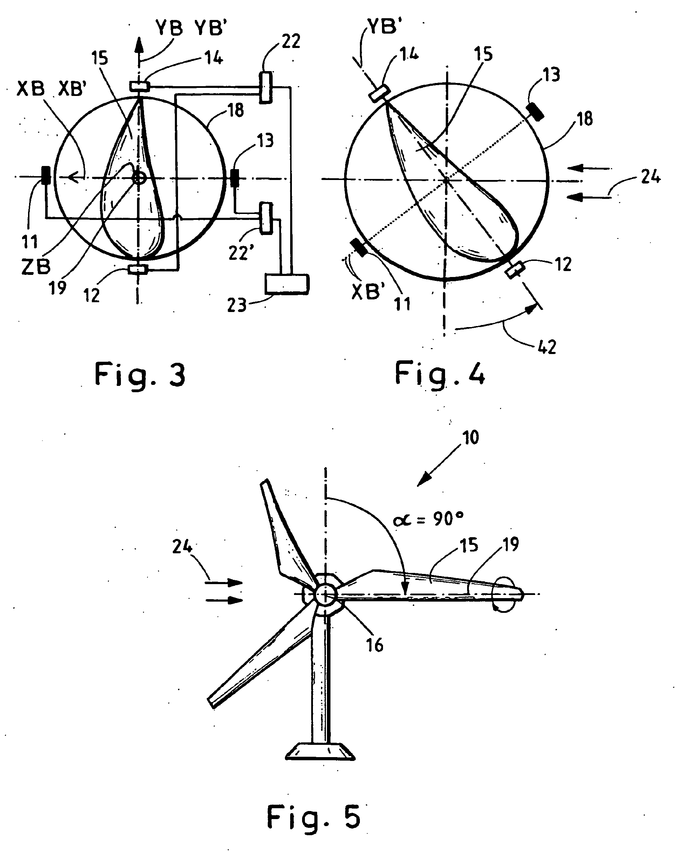

In der Messpraxis hat es sich bewährt, in den zylindrischen Teil der Rotorblätter in der Nähe des Blattflansches Dehnungsmessstreifen an der Innenwand des Rotorblattes anzubringen bzw. anzuordnen. Alternativ können auch andere Sensoren, beispielsweise Mess-Dehnbolzen der Blattflansch-Lagerverbindung oder andere Dehnungsmesser zum Einsatz kommen. Unter Bezugnahme auf die Fig. 3 und Fig. 4, in denen schematisch ein Blick von dem Blattflansch 18 zur Rotorblattspitze dargestellt ist, wobei ein einziges Profil des Rotorblattes beispielsweise im Schwerpunkt des Rotorblattes dargestellt ist, gezeigt ist, ist die Position von Sensoren 11 bis 14 angedeutet. Es sind zwei gleichartige Sensoren 11 und 13 bzw. 12 und 14 gegenüberliegend angeordnet. Die Achsen durch die Sensoren 11 und 13 sowie 12 und 14 liegen im Wesentlichen senkrecht zueinander.

In Fig. 3, in der der Fall einer Betriebsstellung des Rotorblattes 15 mit einem Blattwinkel nahe 0° dargestellt ist, fallen die Hauptachsen YB' und XB' des Rotorblattschnitts 15 mit den Blattflanschachsen YB und XB zusammen. Mit der vereinfachten Annahme, dass die Blattbiegemomente homogen in den zylindrischen Teil eingeleitet werden, kommen in der Regel Sensoren, die in den Hauptblattachsen eingebracht bzw. angeordnet werden, zum Einsatz. Diese Sensoren 11 - 14 sind auch entsprechend schematisch dargestellt. Diese können naturgemäß auch innerhalb des Blattflansches 18 eingebracht sein. In Fig. 3 ist auch noch dargestellt, dass die Sensoren 11 - 14 mit Kalibriermodulen 22, 22' verbunden sind, die mit einer Steuer- und/oder Regelvorrichtung 23 verbunden sind. In einer vorteilhaften weiteren Ausführungsform sind die Kalibriermodule 22, 22' in einer einzigen Einheit zusammengefasst.

Fig. 4 zeigt eine entsprechende Darstellung eines mit Pitchwinkel 42 verdrehten Rotorblattes 15. Die entsprechenden Hauptachsen YB' und XB' sind um den Pitchwinkel 42 von den Achsen YB und XB verdreht. Es ist auch ein Wind 24 mit einer entsprechenden Windrichtung dargestellt.

In einem ersten Schritt für das Kalibrierverfahren kann das zu kalibrierende Rotorblatt 15 gem. Fig. 5 horizontal bzw. waagerecht ausgerichtet werden, d. h. die Blattachse 19 wird horizontal ausgerichtet. Damit wird der Rotorazimutwinkel α für dieses Blatt 90°. Bei wenig Wind, also bei einer Windgeschwindigkeit, die deutlich unter der Einschaltgeschwindigkeit der Windenergieanlage liegt, kann die Windenergieanlage 10 direkt im Wind stehen bleiben.

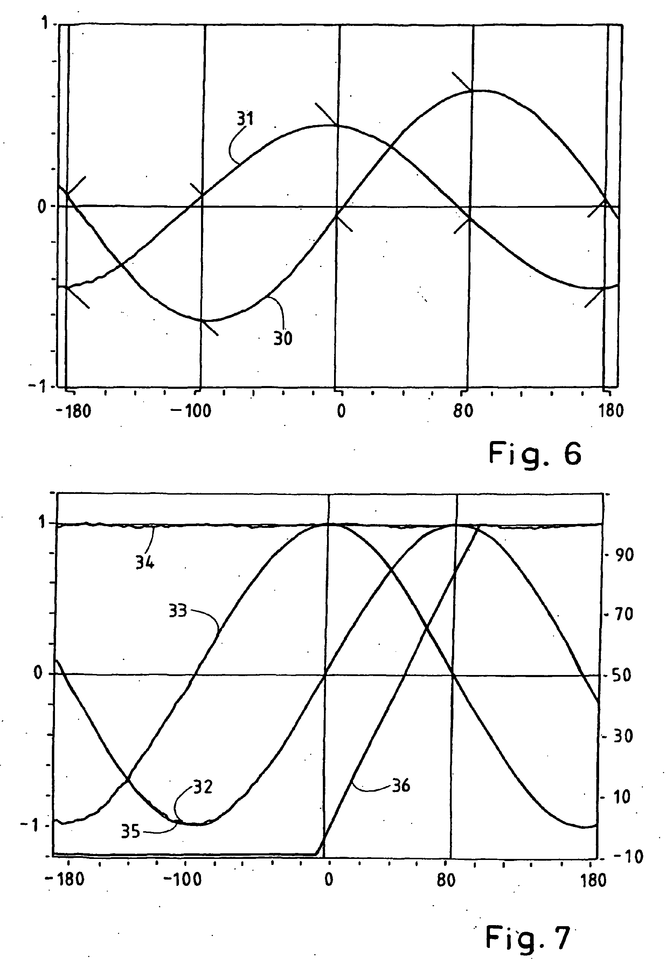

In Fig. 5 ist eine Situation dargestellt, bei der die mittlere Windgeschwindigkeit eines Gondelanemometers, das nicht dargestellt ist, zwischen einer Einschaltgeschwindigkeit der Windenergieanlage und 7 m/s liegt. Hierbei ist die Gondel um 90° linksherum bei einer Draufsicht verfahren worden, so dass das Rotorblatt 15 in Windrichtung angeordnet ist bzw. in einer Art Fahnenstellung ausgerichtet ist. Nun kann das Rotorblatt 15 beispielsweise in einem Bereich von -190° bis 190° gepitcht werden, so dass entsprechende Sensorsignale aufgezeichnet werden können. Eine entsprechende Darstellung von hierdurch gemessenen Signalen ist in Fig. 6 dargestellt. Der Konuswinkel β hat vorzugsweise keinen Einfluss auf den Momentenverlauf bei einer vorstehend dargestellten Blattrotation.

Die Fig. 6 zeigt Rohsignale von zwei Sensoren 11 bis 14, wobei hier zwei orthogonal zueinander ausgerichtete Sensoren, beispielsweise die Sensoren 11, 12 oder 13, 14 Verwendung finden. Die Messkurve 30 betrifft das Signal zum Schlagmoment und die Messkurve 31 betrifft das Signal zum Schwenkmoment. Auf der Ordinate ist eine Spannung in Volt dargestellt, wobei diese Spannung im Anschluss an einen Operationsverstärker anliegt, der das Signal des jeweiligen Sensors entsprechend verstärkt. Auf der Abszisse sind die Pitch-Winkelstellungen des Rotorblattes dargestellt. Die Grafik der Fig. 6 zeigt die Rohsignale der von zwei Sensoren 11 und 12 in den Hauptachsen bzw. genauer gesagt mit einem Winkelversatz zu den Hauptachsen. Es wurden hierbei Dehnmessstreifen-Messstellen verwendet. Die Messstelle in Schwenkrichtung wurde um 5,8° versetzt zur Blattklebenaht aufgebracht, so dass sich ein Verschieben der Maxima relativ zum Nullpunkt bzw. zu 90° ergaben. Die Messsignale sind aufgetragen über den Pitchwinkel des Rotorblattes bei einer Pitchfahrt von -190° bis 190°.

Unter Berücksichtigung der vorliegenden Achsneigung von 6° und der idealisierten Annahme, dass der zylindrische Teil hinter dem Blattflansch als homogener Zylinder betrachtet werden kann und der Masseschwerpunkt auf der Pitch-Drehachse liegt, wird angenommen, dass bei dem Winkel -186°, -96°, -6°, 84° und 174°, die statischen Eigengewichtsmomente im Hinblick auf Schlagmoment und Schwenkmoment ihr Maximum erreichen. An diesen Punkten werden nun Messspannungen SF und SE abgenommen. Aufgrund dieser abgenommenen Messspannungen werden die Biegemomente mit bekannten Crosstalk-Koeffizienten ermittelt. Die Crosstalk-Koeffizienten dienen dazu, mit einem analogen Messsignal multipliziert zu werden, um die aktuellen Biegemomente zu ermitteln. Die so bei bestimmten Winkeln ermittelten Crosstalk-Koeffizienten gelten dann für die gesamte Kurve, also auch bei anderen Winkeln.

6

Aus den Ausgangsgleichungen

$$\text{Gleichung 1:} \quad S_F = A_1 \times M_F + A_3 \times M_E \quad (1.1)$$

und

$$\text{Gleichung 2:} \quad S_E = A_2 \times M_F + A_4 \times M_E \quad (1.2)$$

wobei diese Ausgangsgleichungen für lineare Sensoren Verwendung finden, können die Koeffizienten $A_1$ bis $A_4$ direkt aus den Signalwerten SF und SE aus der Grafik aus Fig. 6 an den entsprechenden Positionen -186°, -96°, -6°, 84° und 174° (bei einer Achsneigung von 6°) ermittelt werden. Hierbei ist zu berücksichtigen, dass $S_F$ das Messsignal für das Schlagmoment und $S_E$ das Messsignal für das Schwenkmoment ist und $M_F$ das Schlagmoment und $M_E$ das Schwenkmoment.

Für den ersten Fall ist ein Pitchwinkel von -180°, 0° bzw. 180° vorgesehen. Die Pitchwinkel sind idealisiert. Gegebenenfalls muss die Achsneigung berücksichtigt werden, also beispielsweise wie oben ein Pitchwinkel von -186°, -6° und 174° gewählt werden. Hierbei ist das Schlagmoment 0, so dass sich $A_3$ und $A_4$ direkt aus einer Kenntnis des Schwenkmoments ergeben. Im Fall eines Winkels von -90° und 90° (bzw. -96° und 84°) ist das Schwenkmoment gleich 0, so dass sich bei einer Kenntnis des Schlagmoments die Koeffizienten $A_1$ und $A_2$ unmittelbar ergeben.

Damit gilt für das Schlagmoment $M_F = D_1 S_F + D_3 S_E$ und für das Schwenkmoment $M_E = D_2 S_F + D_4 S_E$ mit N = $A_1 \times A_4 - A_2 \times A_3$ und $D_1 = A_4/N$, $D_3 = -A_3/N$, $D_4 = A_1/N$, $D_2 = -A_2/N$.

Im Falle von winkelversetzten Sensoren sollte der Winkelversatz durch Rückgriff auf die etwa orthogonal befindlichen Sensoren rechnerisch kompensiert werden. Die rechnerische Kompensation erfolgt z.B. über an sich bekannte, im Wesentlichen Sinus- und Kosinus-Anteile beinhaltende Transformationsmatrizen. Für diesen Fall ist es abweichend von der in Fig. 3 gezeigten Anordnung von Vorteil, wenn das Kalibriermodul für alle vier dargestellten Sensoren als eine einzige Einheit ausgebildet ist. So kann die komplette Kalibrierung, inklusive der Kompensierung der Fehlposition der Sensoren erfolgen, bevor die Sensorsignale in die Regelvorrichtung 23 eingespeist werden. Die Ausbildung eines einzelnen Kalibriermoduls für alle Sensoren hat weiterhin den Vorteil, dass auch ein statistisches Auswerteverfahren problemlos über alle Sensorinformationen mitteln kann.

Hieraus ergeben sich entsprechend berechnete bzw. kalibrierte Schlagmomente 32 und ein kalibriertes Schwenkmoment 33 aus Fig. 7. Die Y-Achse bzw. Abszisse ist in Fig. 7 normiert dargestellt, d. h. eine 1 entspricht dem statischen Nennmoment. Zur Bestätigung der Theorie ergibt sich das resultierende Moment aus Schlag- und Schwenkmoment als ideale Gerade. Dieses ist als kalibriertes Gesamtmoment 34 in Fig. 7 dargestellt. Auch das idealtypische bzw. das theoretische Schlagmoment 35 errechnet aus dem Sinus vom Pitchwinkel plus der Achsneigung Sigma multipliziert mit dem statischen Eigengewichtsmoment (Sin(Pitchwinkel + σ) x $M_{Stat}$) verläuft im Wesentlichen exakt sowie das kalibrierte Schlagmoment 32. Die Kurve 35, nämlich das theoretisch berechnete Schlagmoment und das kalibrierte Schlagmoment 32 haben eine hohe Übereinstimmung. Zur Sicherheit wurde im Bereich von -10 bis 100° noch der gemessene Pitchwinkel 36 aufgetragen.

Alternativ ist es möglich, nicht den vollen Winkelbereich von -190° bis 190° bzw. -180 bis 180° zu messen und durch Nullsetzen der Momente bei bestimmten Pitchwinkeln die Koeffizienten $A_1$ bis $A_4$ zu ermitteln. Es kann anstelle dessen das Schlagmoment durch die Formel $M_F$ = Sin(Pitchwinkel + σ) x $M_{Stat}$ bzw. das Schwenkmoment $M_E$ = Cos (Pitchwinkel + σ) x $M_{Stat}$ berechnet werden. Hierdurch ergeben sich sogar bei einer Pitchfahrt von beispielsweise 0 bis 92° entsprechend viele Ausgangsgleichungen für die Rohdaten, so dass die Koeffizienten $A_1$ bis $A_4$ mit einer ausreichenden Güte bestimmt werden können. Dies kann mit einer Ausgleichsrechnung erfolgen, mit der die Koeffizienten ermittelt werden, bei der die Summe der Quadrate der Abweichung, beispielsweise mit dem Gaus'schen Ausgleichsprinzip, ein Minimum wird. Vorzugsweise werden hierzu das Rotorblatt in die Horizontalposition verbracht und Windlasten möglichst minimiert.

Die eben dargestellten Berechnungen gelten für Sensoren, bei denen ein linearer Zusammenhang zwischen Biegemomenten und Sensorsignal angenommen werden kann. Dies gilt beispielsweise bei üblichen Dehnmessstreifenmessungen. Bei anderen Sensoren, beispielsweise solchen, die mit einer Hysterese behaftet sind, die Bolzenaxialkräfte messen, macht es Sinn, die Umrechnungen genauer vorzusehen bzw. anzupassen, beispielsweise durch Anwendung einer Taylorreihe, die nach dem quadratischen oder dem kubischen Glied abgebrochen wird. Um eine automatische Kalibrierroutine vorzusehen, ist es insbesondere bevorzugt, den Rotorazimutwinkel α mit einer Genauigkeit von wenigstens +/-1° anzugeben.

Ein erfindungsgemäßes Kalibrierverfahren kann nun so aussehen, dass zunächst die Windverhältnisse vorab geprüft werden. Hierzu kann beispielsweise ein 5-Minuten-Mittel gewählt werden. Sofern im 5-Minuten-Mittel die Windgeschwindigkeit kleiner als beispielsweise 3 m/s oder 5 m/s oder 7 m/s ist, wird eine Kalibrierung durchgeführt.

Dann kann die Anlage gestoppt werden und das Rotorblatt, auf dem der oder die zu kalibrierenden Sensoren angeordnet sind, in einer Winkelposition von 90° (vorzugsweise +/-0,5°) gestoppt werden. Es wird dann eine Rotorbremse eingelegt. Die Anlage wird ggf. aus dem Wind gedreht, die Gondel wird um beispielsweise 90° nach links bei Draufsicht bewegt, wenn die Windgeschwindigkeit unter einer vorgebbaren Einschaltwindgeschwindigkeit ist. Es wird eine Pitchfahrt für das Rotorblatt in einem maximal möglichen Bereich vorgenommen, beispielsweise -190° bis +190°. Als Pitchrate kommen Fahrgeschwindigkeiten von kleiner oder gleich 6°/s in Frage.

Als Messgrößen sollten die Signalen $S_F$ und $S_E$, also Rohdaten von den Sensoren zum Schwenkmoment und zum Schlagmoment aufgenommen werden sowie der Pitchwinkel. Diese Signale werden vorzugsweise mit einer Abtastrate von mindestens 100 ms erfasst. Vorzugsweise wird ein noch kürzerer Abstand der Messungen vorgesehen. Aus den ermittelten Messwerten werden die Crosstalk-Koeffizienten, wie vorstehend beschrieben, ermittelt. Mit den ermittelten Koeffizienten wird nun für die Messpitchfahrt ein Momentenverlauf mit einem idealisierten berechneten Momentenverlauf verglichen. Sofern die Abweichungen zwischen dem gemessenen Momentenverlauf bzw. dem kalibrierten Schlagmoment und dem kalibrierten Schwenkmoment mit den theoretischen Momenten verglichen, weniger als 3% abweichen, so wird die Messung als gültig gewertet und die Anlage freigegeben und wieder in Betrieb gesetzt. Sofern die Abweichung außerhalb eines Toleranzbereichs von 3% liegt, werden die Crosstalk-Koeffizienten entsprechend angepasst und das Messverfahren wird erneut durchgeführt. Sollte nach mehreren dieser Iterationsschritte immer noch eine zu große Abweichung vorliegen, kann ein Fehlersignal erzeugt werden, das eine Angabe darüber ermöglicht, dass ein oder mehrere Sensoren defekt sind, oder dass die Umgebungsbedingungen, z.B. aufgrund einer zu hohen Windgeschwindigkeit und/oder Windturbulenz, keine ausreichend genaue Kalibrierung erlauben.

Alternativ zum Feststellen bzw. ein Bremsen der Windenergieanlage bzw. des Rotors kann das Kalibrierverfahren auch beim Trudeln der Rotorblätter erfolgen, wobei hierbei eine statistische Auswertung durch Aufnahme mehrerer gleichartiger Signale stattfindet, d.h. mehrerer Messsignale beim gleichen Pitchwinkel, allerdings bei unterschiedlichen Rotorazimutwinkeln $\alpha$. Es wird dann für verschiedene Azimutwinkel $\alpha$ und den entsprechend gleichen Pitchwinkeln eine Mittlung der gemessenen Schlagmomente und Schwenkmomente vorgenommen und diese dann mit der idealisierten Kurve bzw. dem idealisierten Momentenverlauf verglichen.

Ein Kalibrierverfahren für eine Naben- oder Wellensensorik kann so aussehen, dass mehrere Rotationen des Rotors (Nabe oder Welle) vorgesehen sein können, während der der Rotationswinkel und die entsprechenden Momente durch die entsprechenden Sensoren aufgenommen werden. Durch ein Least-Square-Verfahren bzw. eine entsprechende Statistik kann dann eine Kalibrierung der Sensoren stattfinden.

Vorzugsweise findet die Durchführung des Kalibrierverfahrens bei geringer oder gar keiner Sicht statt, beispielsweise im Dunkeln oder bei Nebel. Vorzugsweise ist hierzu eine Sichtweitenerkennung vorgesehen bzw. ein Verfahren oder eine Vorrichtung zur Sichtweitenerkennung, die ein Signal ausgibt, das insbesondere eine Erlaubnis für das Durchführen eines Kalibrierverfahrens angibt, wenn eine vorgebbare Sichtweite unterschritten ist.

Bezugszeichenliste

| | |
|---|---|
| 10 | Windenergieanlage |
| 11 - 14 | Sensor |
| 15, 15', 15" | Rotorblatt |
| 6 | Nabe |
| 17 | Welle |
| 18 | Blattflansch |
| 19 | Blattachse |
| 20 | Wellenachse |
| 22, 22' | Kalibriermodul |
| 23 | Steuer- und/oder Regelvorrichtung |
| 24 | Wind |
| 30 | Messkurve Schlagmoment |
| 31 | Messkurve Schwenkmoment |
| 32 | kalibriertes Schlagmoment |
| 33 | kalibriertes Schwenkmoment |
| 34 | kalibriertes Gesamtmoment |
| 35 | theoretisches Schlagmoment |

(fortgesetzt)

| | |
|---|---|
| 36 | gemessener Pitchwinkel |
| 40 | Gondel |
| 41 | Turm |
| 42 | Pitchwinkel |
| $\alpha$ | Azimutwinkel |
| $\sigma$ | Achsneigung |
| $\beta$ | Konuswinkel |
| XB | Achse |
| YB | Achse |
| ZB | Achse |
| $M_{YB}$ | Moment um Achse YB |
| $M_{XB}$ | Moment und Achse XB |

**Patentansprüche**

1. Verfahren zum Betreiben einer Windenergieanlage (10) umfassend ein Verfahren zum Kalibrieren wenigstens eines Sensors (11 - 14) einer Windenergieanlage (10), wobei die Windenergieanlage (10) wenigstens ein bewegbares Bauteil (15, 15', 15", 16,17) aufweist, wobei das Bauteil (15 - 17) um eine vorbestimmbare Achse (19, 20) geschwenkt oder gedreht wird und wobei ein von dem wenigstens einen Sensor (11 - 14) erfasster Messwert (30, 31), der ein Maß für die Belastung des Bauteils (15 -17) ist, ausgewertet wird, wobei das Kalibrierverfahren automatisch ausgeführt wird, wobei das Kalibrierverfahren durch ein Kalibriersignal initiiert wird, wobei nach dem Initiieren des Kalibrierverfahrens durch das Kalibriersignal die Windenergieanlage (10) angehalten wird oder das Kalibrierverfahren beim Trudeln der Rotorblätter (15-15") erfolgt, wobei das Auswerten es umfasst, dass bei einer Abweichung des durch eine Kalibrierfunktion angepassten Messwertes (30, 31) von einer vorgebbaren und/oder gespeicherten und/oder ermittelten Referenz (35), die größer ist als ein vorgebbarer Abweichungssollwert, der durch die Kalibrierfunktion angepasste Messwert (30, 31) Basis für das Erstellen und Speichern einer angepassten Kalibrierfunktion ist, oder wobei das Auswerten es umfasst, dass bei einer Abweichung des erfassten Messwertes (30, 31) von einer vorgebbaren und/oder gespeicherten und/oder ermittelten Referenz (35), die größer ist als ein vorgebbarer Abweichungsgrenzwert, der erfasste Messwert (30, 31) Basis für das Erstellen und Speichern einer angepassten Kalibrierfunktion ist.

2. Verfahren nach Anspruch 1, **dadurch gekennzeichnet, dass** der wenigstens eine Sensor (11 - 14) ein Belastungssensor ist, wobei insbesondere eine Steuer- und/oder Regelvorrichtung (23) und außerdem ein Kalibriermodul (22, 22') vorgesehen sind, wobei das Kalibriermodul (22, 22') das Kalibrieren der Messwerte durchführt und die kalibrierten Werte der Steuer - und/oder Regelvorrichtung (23) als Eingangsgrößen übermittelt, wobei insbesondere die Steuer- und/oder Regelvorrichtung (23) den Betrieb der Windenergieanlage (10) steuert und/oder regelt, wobei insbesondere das Kalibriermodul (22, 22') in der Steuer- und/oder Regelvorrichtung (23) integriert ist.

3. Verfahren nach Anspruch 1 oder 2, **dadurch gekennzeichnet, dass** nach dem Initiieren des Kalibrierverfahrens (10) durch das Kalibriersignal ein Rotorblatt (15 - 15") der Windenergieanlage (10) in eine im Wesentlichen vorgebbare Lage verbracht wird, wobei insbesondere das Verbringen des Rotorblattes (15 - 15") in eine vorgebbare Lage relativ zur Windrichtung geschieht, wobei insbesondere das Verbringen des Rotorblattes (15 - 15") in eine im Wesentlichen horizontale Lage geschieht.

4. Verfahren nach einem der Ansprüche 1 bis 3, **dadurch gekennzeichnet, dass** eine Mehrzahl von Messwerten (30, 31) des wenigstens einen Sensors (11 - 14) beim Schwenken oder Drehen des Bauteils (15 - 17) aufgenommen und/oder ausgewertet wird, wobei insbesondere die Referenz eine Mehrzahl oder eine Funktion von Sollwerten (35), die vorgebbar und/oder gespeichert und/oder ermittelt sind, umfasst.

5. Verfahren nach einem der Ansprüche 1 bis 4, **dadurch gekennzeichnet, dass** das Erstellen und Speichern einer angepassten Kalibrierfunktion wiederholt wird.

6. Verfahren nach einem der Ansprüche 1 bis 5, **dadurch gekennzeichnet, dass** die Auswertung und/oder das Kalibrierverfahren automatisch erfolgt, wobei insbesondere die Messwerte (30, 31) mit einer Frequenz von 0,01 Hz bis 1000 Hz aufgenommen werden, wobei insbesondere die Messwerte (30, 31) über den vollen Bereich des Schwenkens oder Drehens aufgenommen werden, wobei insbesondere das Bauteil ein Rotorblatt (15 - 15") und/oder eine Nabe (16) und/oder eine Welle (17) ist, wobei insbesondere die Achse (19, 20) eine Rotorwellenachse (20) oder eine Rotorblattlängsachse (19) ist.

**7.** Verfahren nach Anspruch 6, **dadurch gekennzeichnet, dass** wenn das Bauteil (15 - 17) ein Rotorblatt (15 - 15") ist, das Schwenken oder Drehen über mehr als 90°, insbesondere mehr als 100°, insbesondere mehr als 120°, insbesondere mehr als 180°, insbesondere mehr als 270°, insbesondere mehr als 360°, geschieht oder wenn das Bauteil (15 - 17) eine Nabe (16) und/oder eine Welle (17) ist, das Schwenken oder Drehen über mehrere Umläufe geschieht.

**8.** Verfahren nach einem der Ansprüche 5 bis 7, **dadurch gekennzeichnet, dass** ein Fehlersignal erzeugt wird, wenn ein vollständiges Kalibrierverfahren in einer vorgebbaren Zahl von Iterationen wiederholt dazu führt, dass die Abweichung des mit der Kalibrierfunktion angepassten Messwertes (30, 31) von der Referenz größer ist als der vorgebbare Abweichungssollwert.

**9.** Windenergieanlage (10) mit einem Kalibriermodul (22, 22') zum automatischen Kalibrieren wenigstens eines Sensors (11 - 14), der die Belastung eines bewegbaren Bauteils (15 - 17) der Windenergieanlage (10) misst, wobei das Kalibriermodul (22, 22') zur Ausführung eines Verfahrens nach einem der Ansprüche 1 bis 8 ausgebildet ist.

**10.** Windenergieanlage (10) nach Anspruch 9, **dadurch gekennzeichnet, dass** außerdem eine Steuer- und/oder Regelvorrichtung (23) vorgesehen ist, die mit dem Kalibriermodul (22, 22') verbunden ist oder in die das Kalibriermodul (22, 22') integriert ist.

## Claims

**1.** A method of operating a wind turbine generator system (10) including a method of calibrating at least one sensor (11-14) of a wind turbine generator system (10), wherein the wind turbine generator system (10) includes at least one movable component (15, 15', 15", 16, 17) wherein the component (15, 17) is pivoted or rotated about a pre-determinable axis (19, 20) and wherein a measured value (30, 31) detected by the at least one sensor (11, 14), which is a measure of the loading of the component (15, 17), is analysed, wherein the calibration method is performed automatically, wherein the calibration method is initiated by a calibration signal, wherein after the initiation of the calibration method by the calibration signal the wind turbine generator system (10) is stopped or the calibration method occurs with spinning of the rotor blades (15', 15"), wherein the analysis includes that when a measured value (30, 31) adapted by a calibration function differs from a pre-determinable and/or stored and/or determined reference (35) by more than a pre-determinable desired difference value, the measured value (30, 31) adapted by the calibration function is the basis for the creation and storage of an adapted calibration function, or wherein the analysis includes that if the detected measured value (30, 31) differs from a pre-determinable and/or stored and/or calculated reference (35) by more than a pre-determinable difference threshold value, the detected measured value (30, 31) is the basis for the creation and storage of an adapted calibration function.

**2.** A method as claimed in claim 1, **characterised in that** the at least one sensor (11, 14) is a load sensor, wherein, in particular, a control and/or regulating device (23) and also a calibration module (22, 22') are provided, wherein the calibration module (22, 22') performs the calibration of the measured values and transmits the calibrated values to the control and/or regulating device (23) as input parameters, wherein, in particular, the control and/or regulating device 23 controls and/or regulates the operation of the wind turbine generator system (10), wherein, in particular the calibration module (22, 22') is integrated into the control and/or regulating device (23).

**3.** A method as claimed in claim 1 or 2 **characterised in that** after the initiation of the calibration method by the calibration signal, a rotor blade (15-, 15⁻) of the wind turbine generator system (10) is moved into a substantially pre-determinable position, wherein, in particular, the movement of the rotor blade (15-15") occurs into a pre-determinable position relative to the wind direction, wherein, in particular, the movement of the rotor blade (15-15") occurs into a substantially horizontal position.

**4.** A method as claimed in one of claims 1 to 3, **characterised in that** a plurality of measured values (30, 31) of the at least one sensor (11, 14) are recorded and/or analysed during pivotal movement or rotation of the component (15, 17), wherein, in particular, the reference includes a plurality or a function of desired values (35), which are pre-

determinable and/or stored and/or calculated.

5. A method as claimed in one of claim 1 to 4, **characterised in that** the creation and storage of an adapted calibration function is repeated.

6. A method as claimed in one of claims 1 to 5, **characterised in that** the analysis and/or the calibration method is effected automatically, wherein, in particular, the measured values (30, 31) are recorded with a frequency of 0.01Hz to 1000Hz, wherein, in particular, the measured values (30, 31) are recorded over the full range of the pivotal movement or rotation, wherein, inparticular, the component is a rotor blade (15-15") and/or a hub (16) and/or a shaft (17), wherein, in particular, the axis (19, 20) is a rotor shaft axis (20) or a rotor blade longitudinal axis (19).

7. A method as claimed in claim 6, **characterised in that** when the component (15, 17) is a rotor blade (15-15"), the pivotal movement or rotation occurs over more than 90°, particularly more than 100°, particularly more than 120°, particularly more than 180°, particularly more than 270°, particularly more than 360° or when the component (15, 17) is a hub (16) and/or a shaft (17), the pivotal movement or rotation occurs over several revolutions.

8. A method as claimed in one of claims 5 to 7, **characterised in that** an error signal is produced when a complete calibration method in a pre-determinable number of iterations repeatedly results in the difference of the measured value (30, 31) of the reference adapted with the calibration function from the reference being larger than the pre-determinable desired difference value.

9. A wind turbine generator system (10) with a calibration module (22, 22') for automatically calibrating at least one sensor (11-14), which measures the loading of a movable component (15, 17) of the wind turbine generator system (10), wherein the calibration module (22, 22') is constructed to perform a method as claimed in one of claims 1 to 8.

10. A wind turbine generator system (10) as claimed in claim 9, **characterised in that** a control and/or regulating device (23) is also provided, which is connected to the calibration module (22, 22') or is integrated into the calibration module (22, 22').

## Revendications

1. Procédé destiné à exploiter une centrale à énergie éolienne (10) comprenant un procédé destiné à calibrer au moins un capteur (11 - 14) d'une centrale à énergie éolienne (10), dans lequel la centrale à énergie éolienne (10) présente au moins un composant mobile (15, 15', 15", 16, 17), le composant (15 - 17) pivotant ou tournant autour d'un axe (19, 20) pouvant être prédéterminé, étant entendu qu'une valeur de mesure (30, 31) déterminée par l'au moins un capteur (11 - 14), qui est une mesure de la charge du composant (15 - 17), est analysée, étant entendu que le procédé de calibrage est exécuté automatiquement, étant entendu que le procédé de calibrage est démarré par un signal de calibrage, étant entendu qu'après le démarrage du procédé de calibrage par le signal de calibrage, la centrale à énergie éolienne (10) est arrêtée ou le procédé de calibrage est réalisé avec les pales du rotor (15-15") en vrille, étant entendu que l'analyse comprend le fait que, dans le cas d'une déviation de la valeur de mesure (30, 31) adaptée au moyen d'une fonction de calibrage par rapport à une référence (35) prédéterminée et/ou enregistrée et/ou calculée qui est supérieure à une valeur de consigne de déviation prédéterminée, la valeur de mesure (30, 31) adaptée au moyen de la fonction de calibrage constitue la base de l'élaboration et de l'enregistrement d'une fonction de calibrage adaptée, ou étant entendu que l'analyse comprend le fait que, dans le cas d'une déviation de la valeur de mesure observée (30, 31) par rapport à une référence prédéterminée et/ou enregistrée et/ou calculée qui est supérieure à une valeur limite de déviation prédéterminée, la valeur de mesure observée (30, 31) constitue la base de l'élaboration et de l'enregistrement d'une fonction de calibrage adaptée.

2. Procédé selon la revendication 1, **caractérisé en ce que** l'au moins un capteur (11 - 14) est un capteur de charge, étant entendu en particulier qu'un dispositif de commande et/ou de régulation (23) et, en plus, un module de calibrage (22, 22') sont prévus, étant entendu que le module de calibrage (22, 22') exécute le calibrage des valeurs de mesure et transmis les valeurs calibrées au dispositif de commande et/ou de régulation (23) en tant de grandeurs d'entrée, étant entendu en particulier que le dispositif de commande et/ou de régulation (23) commande et/ou régule le fonctionnement de la centrale à énergie éolienne (10), étant entendu en particulier que le module de calibrage (22, 22') est intégré dans le dispositif de commande et/ou de régulation (23).

3. Procédé selon la revendication 1 ou 2, **caractérisé en ce qu'**après le démarrage du procédé de calibrage (10) au moyen du signal de calibrage, une pale de rotor (15 - 15") de la centrale à énergie éolienne (10) est déplacée dans une position pouvant sensiblement être prédéterminée, étant entendu en particulier que le déplacement de la pale de rotor (15 - 15") est effectué dans une position pouvant être déterminée par rapport à la direction du vent, étant entendu en particulier que le déplacement de la pale de rotor (15 - 15") est effectué dans une position sensiblement horizontale.

4. Procédé selon l'une des revendications 1 à 3, **caractérisé en ce qu'**une pluralité de valeurs de mesure (30, 31) de l'au moins un capteur (11 - 14) sont intégrées et/ou analysées lors du pivotement ou de la rotation du composant (15 - 17), étant entendu en particulier que la référence comprend une pluralité ou une fonction de valeurs de consigne (35) qui peuvent être prédéterminées et/ou sont enregistrées et/ou sont calculées.

5. Procédé selon l'une des revendications 1 à 4, **caractérisé en ce que** l'élaboration et l'enregistrement d'une fonction de calibrage adaptée sont répétés.

6. Procédé selon l'une des revendications 1 à 5, **caractérisé en ce que** l'analyse et/ou la fonction de calibrage sont réalisées automatiquement, étant entendu en particulier que les valeurs de mesure (30, 31) sont intégrées avec une fréquence de 0,01 Hz à 1 000 Hz, étant entendu en particulier que les valeurs de mesure (30, 31) sont intégrées sur la zone complète du pivotement ou de la rotation, étant entendu en particulier que le composant est une pale de rotor (15 - 15") et/ou un moyeu (16) et/ou un arbre (17), étant entendu en particulier que l'axe (19, 20) est un axe d'arbre rotor (20) ou un axe longitudinal de pale de rotor (19).

7. Procédé selon la revendication 6, **caractérisé en ce que** si le composant (15 - 17) est une pale de rotor (15 - 15"), le pivotement ou la rotation est effectué sur plus de 90°, en particulier plus de 100°, en particulier plus de 120°, en particulier plus de 180°, en particulier plus de 270°, en particulier plus de 360°, ou si le composant (15 - 17) est un moyeu (16) et/ou un arbre (17), le pivotement ou la rotation est effectué sur plusieurs cycles.

8. Procédé selon l'une des revendications 5 à 7, **caractérisé en ce qu'**un signal d'erreur est produit si un procédé de calibrage complet conduit de façon répétée, dans un nombre pouvant être prédéterminé d'itérations, à ce que la déviation de la valeur de mesure (30, 31) adaptée avec la fonction de calibrage par rapport à la référence est supérieure à la valeur de consigne de déviation pouvant être prédéterminée.

9. Centrale à énergie éolienne (10) comprenant un module de calibrage (22, 22') destiné à calibrer automatiquement au moins un capteur (11 - 14), qui mesure la charge d'un composant mobile (15 - 17) de la centrale à énergie éolienne (10), étant entendu que le module de calibrage (22, 22') est réalisé aux fins de l'exécution d'un procédé selon l'une des revendications 1 à 8.

10. Centrale à énergie éolienne (10) selon la revendication 9, **caractérisée en ce qu'**il est en outre prévu un dispositif de commande et/ou de régulation (23) qui est relié avec le module de calibrage (22, 22') ou dans lequel le module de calibrage (22, 22') est intégré.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10219664 A1
- WO 2005111414 A
- EP 1359321 A1
- WO 9957435 A
- WO 0133075 A1
- EP 0995904 A2

**In der Beschreibung aufgeführte Nicht-Patentliteratur**

- **H. SEIFERT ; H. SÖKER.** Messung von Lastkollektiven in einem Windpark. *DEWI,* 1994, 399-402